# EUROPEAN PATENT SPECIFICATION

(11) **EP 0 335 962 B1**
(45) Date of publication and mention of the grant of the patent: **22.02.1995**
(21) Application number: 88909886.9
(22) Date of filing: 27.09.1988
(51) Int. Cl.: G06F 3/14, G09G 3/00

(54) **ELECTRONIC DISPLAY SYSTEM**
ELEKTRONISCHES ANZEIGESYSTEM
SYSTEME D'AFFICHAGE ELECTRONIQUE

(30) Priority: 13.10.1987 US 108860
(43) Date of publication of application: 11.10.1989
(73) Proprietor: MOTOROLA, INC., Schaumburg, IL 60196 (US)
(72) Inventor: MINKUS, Loren, Stuart, Buffalo Grove, IL 60089 (US)
(74) Representative: Dunlop, Hugh Christopher
(86) International application number: US8803341
(87) International publication number: WO8903571

(56) References cited:
- EP-A- 0 068 093
- EP-A- 0 147 936
- GB-A- 2 120 820
- US-A- 4 342 029
- US-A- 4 464 655
- US-A- 4 477 809
- US-A- 4 697 243
- US-A- 4 775 857
- IBM TECHNICAL DISCLOSURE BULLETIN, vol. 24, no. 12, May 1982, pages 6309-6310, NEW YORK, US; A. APPEL ET AL.: "REMOTE ACTIVATION OF COMPUTER TERMINALS"

## Description

This invention relates to the remote control of displays, and more particularly to the remote control of displays wherein information regarding the controlled display is provided to the control location.

### Background

Prior art remote display controllers provided control from a control location to a remote display or signal by means of direct electrical connection or radio wave communication. In such systems, a signal was transmitted from the remote location to the display. One of several predetermined messages stored at the display was selected and displayed. In some cases, a provision was made to acknowledge receipt of the signal. The display, however, did not provide to the control location a positive response indicating that the correct message had been selected, or that the message had been properly displayed.

The document IBM Technical Disclosures Bulletin Volume 24 no. 12 of May 1982 at page 6309 to page 6310 describes a computer system providing for remote activation of a computer terminal from a host computer. The computer terminal has a display and can be programmed to display messages when remotely activated. A local status indicator shows that the terminal has been remotely activated in the recent past.

To date, prior art systems have offered no means for providing information to the control location relating to the status of the display itself, as distinguished from the displayed message.

### Summary of the Invention

According to the present invention, there is provided a display system including a remote display medium means having a display medium solely for displaying messages, and central processing means for initiating a message for display on said display medium, said display system further including first means for providing electronic communication over a transmission medium between the central processing means and remote display medium means, said first means being controlled to communicate a message from the central processing means to the display medium and second means disposed at the remote display medium means for receiving the message and for causing the message to be displayed on the display medium, said display system characterized by: third means disposed at the remote display medium means, the third means including means for monitoring the second means to provide status information relating to the correctness of the message caused to be displayed on the display medium by verifying pixels of the display medium as being "on" or "off"; and fourth means associated with the display medium for controlling the first means to electronically communicate the status information of the third means to the central processing means.

The invention has the advantage of providing a remotely controlled display system in which various forms of messages may be remotely provided to a display, and information regarding the display and/or the message may be provided to the control location.

An exemplary embodiment of the present invention will now be described with reference to the accompanying drawings.

### Brief Description of the Drawings

Figure 1 is a block diagram of a system according to the invention.

Figure 2 is a block diagram of a site controller according to the invention.

### Detailed Description of a Preferred Embodiment

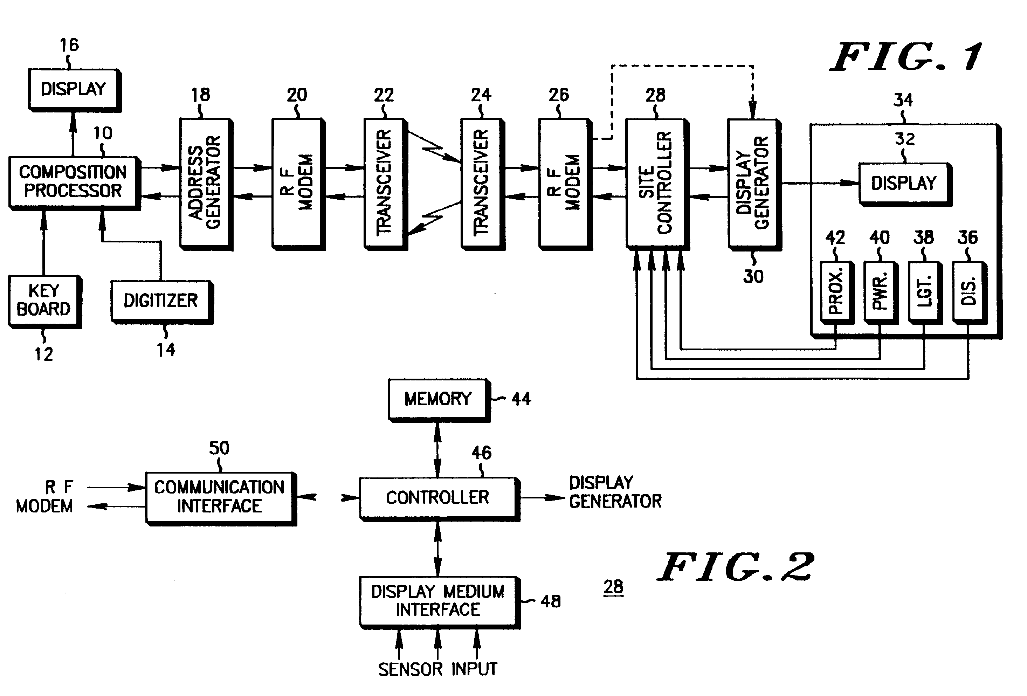

Figure 1 shows a block diagram of a display system having a means for remotely controlling from a control location the presentation of a message on a remote display medium. A processor for composing a message is shown at 10 and is accessed by means of a keyboard 12 or a digitizer 14. Associated with processor 10 is a display screen 16 on which can be viewed the message as composed by the processor or as is stored in the memory thereof. The processor 10 may in practice be a general purpose digital computer, such as a personal computer now offered by a number of manufacturers, or may be a special purpose controller. A personal computer would have associated therewith a software package for generating messages or graphics from a keyboard input 12. An alternative data entry or composition means may be the digitizer 14, several types of which are commonly available, and which are used to enter into a computer coordinates from which a graphic design can be reproduced. Other inputs, such as facsimile for example, could also be used.

Within the processor 10 is a memory, which may be the main memory of a personal computer, of sufficient size to store the message or graphical composition to be displayed. While the organization of the memory will be such as to conveniently store the type of message desired, such a memory may be of the bit-mapped type, where the display screen 16 of the processor 10 is represented by a large number of discrete picture elements, or pixels, the illumination of selected ones of which form a text or graphic message or representation.

Connected to the composition processor 10 is an address generator 18 which is capable of accessing the message storage memory of the processor to cause the contents thereof to be read out of the memory, or to cause data to be read into the memory. In practice, the address generator may be a part of the processor 10, particularly in those cases where the processor is a general purpose digital computer. As data representing a composed message is read from the memory of the processor 10 which is located at a control location it is passed to a radio-frequency modem 20 for transmission by radio waves from a transceiver 22 to a transceiver 24 at a remote location.

The transceiver 24 is coupled to a second RF modem 26 located at the remote location and receives the transmitted data representing the message as stored in the memory of processor 10. From the RF modem 26, the message data is passed to a site controller 28, the details of which are shown in Figure 2. The site controller comprises, among other things, a memory similar to the memory associated with the processor 10, for storing, preferrably in bit-mapped fashion, the data representing the message to be displayed. A display generator 30 utilizes the data stored in the site controller memory to generate a pattern on a display 32 which is associated with a display medium 34 such as a billboard or other display medium. The display generator may be of conventional design and many apparatus are well known for taking the contents of a memory and displaying the same on displays of various kinds. The display itself may be in the form of an array of light bulbs, including a sub-array of of multi-colored light bulbs for each pixel to be represented. Alternatively the display may be alphanumeric, or may be of a "television" type. The display generator 30 would select, according to conventional techniques, one light of a specified color from each sub-array of the display to produce a color display in accordance with the data in the memory. Alternatively, the display generator itself may contain a memory sufficient for storing the transmitted data for display on display 32.

In a preferred embodiment, the display may be comprised of a plurality of pixels of a material known as PLZT, a display made from which is disclosed in U.S. Patent No. 4,630,040, assigned to the assignee of the instant application. Such displays are available in both monochromatic and color versions.

The display medium itself, which may be a billboard only a portion of which is comprised of the display 32, may also comprise one or more sensors such as a display sensor 36 which is capable of detecting which of the display pixels are "on" and which are "off", a light sensor 38 which is capable of detecting whether the billboard main illumination system is operating, a power sensor 40, capable of determining that the billboard medium is being supplied with proper power, and a proximity sensor 42 for detecting possible intrusions onto the site of the display medium.

Each of the sensors 36, 38, 40, 42 may be connected to the site controller which, through an appropriate controller is able to transmit the status information generated by these sensors back to the control location via transceivers 24 and 22. This status information may be transmitted at a predetermined time or upon request from the control location. If the site controller is a general purpose digital computer, such as a personal computer, it is well within the skill of a system developer to program each of the computers to perform the functions enumerated. Sensors capable of performing the operations of the sensor described above are readily available, as is the software with which to interface these sensors to a general purpose computer.

In an alternative embodiment, the display generator 30 may be of such a design as to allow the generated display information to be "echoed" to the site controller for transmission to the control location such that the contents of the display, as executed, may be confirmed at the control location.

Figure 2 shows a block diagram of a site controller 28 of Figure 1. As previously noted, the site controller comprises a memory 44 for storing the data received from processor 10 representing a message to be displayed. The memory may also contain control programs to direct the operation of the display generator, particularly if the site controller includes a general purpose digital computer as the functional controller 46 thereof. In such a case, the memory 44 may be the main memory of such computer. A display medium interface 48 accepts inputs from sensors 36, 38, 40, 42 and may be interrogated by or may interrupt the processor 46 to provide the status information as needed by the control location by way of a communications interface 50. As previously noted, the controller either includes or is coupled to the display generator 30 in order to provide data to be displayed or to sense displayed data for confirmation to the control location.

The memory 44, whether or not it is a part of the main memory of controller 46, may be of such a capacity as to be capable of storing more than one message for display. In this case, a plurality of messages may be transmitted from the control location to the display location at one time for display on command from the control location or from a locally stored program sequence at different times. For example, several messages may be transmitted at night when loading on the RF network is light, for display at different times during the next day. It is within the skill of a programmer to program a digital computer which has an appropriate timing mechanism to generate the displays previously transmitted at any time subsequent.

In operation, an operator may compose a message or display on the screen 16 of the composition processor 10 in alphanumeric or graphic form, using computer generated graphics or pixel-generated graphics. A data representation of the message or display is stored in the memory of the processor for later transmission to the display medium at a remote location.

Subsequently, at the operators command or at the request of a processor at the remote location, the stored data representing the message or display is transmitted, via the RF modem 20 and transceiver 22 to a corresponding transceiver 24 and RF modem 26 at a remote location.

The data is then stored in the memory 44 of a site controller for presentation to a display generator 30 or for later use. A plurality of messages can be stored in the memory 44 for individual recall and display at a later time. On command from the control location, or at a predetermined time, the data from memory 44 is provided to the display generator 30 to actuate the display 32. At the same time, or at a later time, a representation of the stored message, the displayed message, or the contents of the display generator is provided to the site controller so that the control location can confirm that the proper message was received and/or displayed.

Additionally, the display medium itself, in a preferred embodiment a billboard, has associated therewith a number of functions which are desired to be monitored. For example, it is desireable for the control location to have information regarding the proper operation of the electrical supply to the billboard for lighting purposes. To this end, certain sensors 38, 40 are provided to monitor these functions and to report the status thereof back to the control location upon request, or at prescribed times, or in the event of malfunction. An intrusion detector, or proximity sensor, 42 may also be provided. Preferrably these status monitors are coupled to the site controller in a known manner such that the information provided can be transmitted via the transceivers 22 and 24 to the control location.

Additionally, it is within the capability of the apparatus described herein to allow the lighting, for example of the display medium to be operated under the control of the control location. A sensing system such as is described above would then verify the accomplishment of the desired function.

## Claims

1. A display system including a remote display medium means (34) having a display medium (32) solely for displaying messages, and central processing means (34) for initiating a message for display on said display medium (32), said display system further including first means (18, 20) for providing electronic communication over a transmission medium (22) between the central processing means (10) and remote display medium means (34), said first means (18, 20) being controlled to communicate a message from the central processing means (10) to the display medium (32) and second means (24, 26, 30) disposed at the remote display medium means (34) for receiving the message and for causing the message to be displayed on the display medium (32), said display system characterized by:
third means (36, 38, 40, 42) disposed at the remote display medium means (34), the third means (36, 38, 40, 42) including means (36) for monitoring the second means (24, 26, 30) to provide status information relating to the correctness of the message caused to be displayed on the display medium (32) by verifying pixels of the display medium (32) as being "on" or "off"; and
fourth means (28) associated with the display medium (32) for controlling the first means (18, 20) to electronically communicate the status information of the third means (36, 38, 40, 42) to the central processing means (10).

2. A display system as set forth in claim 1, wherein the fourth means (36, 38, 40, 42) controls the first means (18, 20) to communicate the status information to the central processing means (10) upon receipt of the message by the second means.

3. A display system as set forth in claim 1, wherein the fourth means (36, 38, 40, 42) controls the first means (18, 20) to communicate the status information to the central processing means (10) upon request of the status information from the central processing means (10).

4. A display system as set forth in claim 1, wherein the fourth means (36, 38, 40, 42) controls the first means (18, 20) to communicate the status information to the central processing means (10) at a predetermined time.

5. A display system as set forth in any preceding claim, wherein the central processing means (10) includes means (12, 16) for composing a message comprising a processor for creating an alphanumeric message.

6. A display system as set forth in any preceding claim, wherein the central processing means (10) includes means (14, 16) for composing a message comprising a processor for creating a graphic message.

7. A display system as set forth in any preceding claim, wherein the central processing means (10) includes means (14, 16) for composing a message comprising a processor coupled to a digitizing means for creating a graphic message.

8. A display system as set forth in any preceding claim, wherein the fourth means (28) includes means (44, 46, 48, 50) for receiving a plurality of messages and causing said received messages to be displayed on the display medium (32) in accordance with a predetermined schedule.

9. A display system as set forth in claim 8, wherein the fourth means (28) includes means (44, 46, 48, 50) for monitoring the second means (24, 26, 30) to provide the status information relating to the plurality of messages in accordance with the predetermined schedule.

10. A display system as set forth in any preceding claim, wherein display medium means (34) includes a source of illumination for the display medium, and wherein the third means includes an illumination sensor (38) for detecting a malfunction in the source of illumination and providing status information representative thereof.

11. A display system as set forth in any preceding claim, wherein display medium means (34) includes a source of power for the display medium, and wherein the third means (36, 38, 40, 42) includes a power sensor (40) for detecting a malfunction in the source of power and providing status information representative thereof.

12. A display system as set forth in any preceding claim, wherein display medium means (34) includes a sensor (42) for detecting an intrusion within a proximity of said display medium means (34) and for providing status information representative thereof.

## Patentansprüche

1. Anzeigesystem, das eine entfernte Anzeigemediumeinrichtung (34) mit einem Anzeigemedium (32) nur zum Darstellen von Nachrichten und eine zentrale Verarbeitungseinrichtung (34) umfaßt, die eine Nachricht zur Darstellung auf dem Anzeigemedium (32) einleitet, wobei das Anzeigesystem weiter eine erste Einrichtung (18, 20), die eine elektronische Kommunikation über ein Übertragungsmedium (22) zwischen der zentralen Verarbeitungseinrichtung (10) und der entfernten Anzeigemediumeinrichtung (34) bereitstellt, wobei die erste Einrichtung (18, 20) gesteuert wird, um eine Nachricht von der zentralen Verarbeitungseinrichtung (10) an das Anzeigemedium (32) zu übermitteln, und eine zweite Einrichtung (24, 26, 30) umfaßt, die an der entfernten Anzeigemediumeinrichtung (34) angeordnet ist, um die Nachricht zu empfangen und zu veranlassen, daß die Nachricht auf dem Anzeigemedium (32) dargestellt wird, wobei das Anzeigesystem gekennzeichnet ist durch:
eine dritte Einrichtung (36, 38, 40, 42), die an der entfernten Anzeigemediumeinrichtung (34) angeordnet ist, wobei die dritte Einrichtung (36, 38, 40, 42) eine Einrichtung (36) zum Überwachen der zweiten Einrichtung (24, 26, 30) umfaßt, um eine die Richtigkeit der auf dem Anzeigemedium (32) zur Anzeige veranlaßten Nachricht betreffende Statusinformation durch Überprüfung von Pixels des Anzeigemediums (32) auf "Ein" oder "Aus" zu liefern, und
eine mit dem Anzeigemedium (32) verbundene vierte Einrichtung (28), die die erste Einrichtung (18, 20) steuert, um die Statusinformation der dritten Einrichtung (36, 38, 40, 42) an die zentrale Verarbeitungseinrichtung (10) elektronisch zu übermitteln.

2. Anzeigesystem nach Anspruch 1, bei dem die vierte Einrichtung (36, 38, 40, 42) die zweite Einrichtung (18, 20) steuert, um der zentralen Verarbeitungseinrichtung (10) die Statusinformation bei Empfang der Nachricht durch die zweite Einrichtung zu übermitteln.

3. Anzeigesystem nach Anspruch 1, bei dem die vierte Einrichtung (36, 38, 40, 42) die zweite Einrichtung (18, 20) steuert, um der zentralen Verarbeitungseinrichtung (10) die Statusinformation bei Anforderung der Statusinformation von der zentralen Verarbeitungseinrichtung (10) zu übermitteln.

4. Anzeigesystem nach Anspruch 1, bei dem die vierte Einrichtung (36, 38, 40, 42) die zweite Einrichtung (18, 20) steuert, um der zentralen Verarbeitungseinrichtung (10) die Statusinformation zu einer vorbestimmten Zeit zu übermitteln.

5. Anzeigesystem nach einem der vorangehenden Ansprüche, bei dem die zentrale Verarbeitungseinrichtung (10) eine Einrichtung (12, 16) zum Zusammenstellen einer Nachricht enthält, die einen Prozessor zum Erzeugen einer alphanumerischen Nachricht umfaßt.

6. Anzeigesystem nach einem der vorangehenden Ansprüche, bei dem die zentrale Verarbeitungseinrichtung (10) eine Einrichtung (14, 16) zum Zusammenstellen einer Nachricht enthält, die einen Prozessor zum Erzeugen einer graphischen Nachricht umfaßt.

7. Anzeigesystem nach einem der vorangehenden Ansprüche, bei dem die zentrale Verarbeitungseinrichtung (10) eine Einrichtung (14, 16) zum Zusammenstellen einer Nachricht enthält, die einen mit einer Digitalisierungseinrichtung verbundenen Prozessor zum Erzeugen einer graphischen Nachricht umfaßt.

8. Anzeigesystem nach einem der vorangehenden Ansprüche, bei dem die vierte Einrichtung (28) eine Einrichtung (44, 46, 48, 50) umfaßt, die eine Mehrzahl von Nachrichten empfängt und veranlaßt, daß die empfangenen Nachrichten auf dem Anzeigeßedium (32) nach Maßgabe eines vorbestimmten Plans angezeigt werden.

9. Anzeigesystem nach Anspruch 8, bei dem die vierte Einrichtung (28) eine Einrichtung (44, 46, 48, 50) umfaßt, die die zweite Einrichtung (24, 26, 30) überwacht, um die Statusinformation, die die Mehrzahl der Nachrichten betrifft, nach Maßgabe eines vorbestimmten Plans bereitzustellen.

10. Anzeigesystem nach einem der vorangehenden Ansprüche, bei dem die Anzeigemediumeinrichtung (34) eine Beleuchtungsquelle für das Anzeigemedium umfaßt, und bei dem die dritte Einrichtung einen Beleuchtungssensor (38) umfaßt, um eine Funktionsstörung der Beleuchtungsquelle zu ermitteln und eine sie darstellende Statusinformation zu liefern.

11. Anzeigesystem nach einem der vorangehenden Ansprüche, bei dem die Anzeigemediumeinrichtung (34) eine Stromquelle für das Anzeigemedium umfaßt, und bei dem die dritte Einrichtung (36, 38, 40, 42) einen Stromsensor (40) umfaßt, um eine Funktionsstörung der Stromquelle zu ermitteln und eine sie darstellende Statusinformation zu liefern.

12. Anzeigesystem nach einem der vorangehenden Ansprüche, bei dem die Anzeigemediumeinrichtung (34) einen Sensor (42) umfaßt, um ein Eindringen innerhalb einer Nähe der Anzeigemediumeinrichtung (34) zu ermitteln und eine dies darstellende Statusinformation zu liefern.

## Revendications

1. Système d'affichage comprenant un moyen de support d'affichage à distance (34) comportant un support d'affichage (32) pour afficher uniquement des messages, et un moyen de traitement central (34) pour déclencher l'affichage d'un message sur ledit support d'affichage (32), ledit système comprenant, de plus, des premiers moyens (18, 20) pour assurer une communication électronique sur un support de transmission (22) entre le moyen de traitement central (10) et le moyen de support d'affichage à distance (34), lesdits premiers moyens (18, 20) étant commandés pour communiquer un message entre le moyen de traitement central (10) et le support d'affichage (32), et les deuxièmes moyens (24, 26, 30) disposés sur le moyen de support d'affichage à distance (34) pour recevoir le message et pour afficher le message sur le support d'affichage (32), ledit système d'affichage étant caractérisé par:
des troisièmes moyens (36, 38, 40, 42) disposés sur le moyen de support d'affichage à distance (34), les troisièmes moyens (36, 38, 40, 42) comprenant un moyen (36) de contrôle des deuxièmes moyens (24, 26, 30) pour fournir des informations d'état relatives à la correction du message produit pour être affiché sur le support d'affichage (32), en vérifiant que les pixels du support d'affichage (32) sont "actifs" ou "inactifs"; et
un quatrième moyen (28) associé au support d'affichage (32) pour commander les premiers moyens (18, 20) pour communiquer électroniquement les informations d'état des troisièmes moyens (36, 38, 40, 42) au moyen de traitement central (10).

2. Système d'affichage selon la revendication 1, dans lequel les quatrièmes moyens (36, 38, 40, 42) commandent les premiers moyens (18, 20) pour communiquer les informations d'état au moyen de traitement central (10) dès réception du message par les deuxièmes moyens.

3. Système d'affichage selon la revendication 1, dans lequel les quatrièmes moyens (36, 38, 40, 42) commandent les premiers moyens (18, 20) pour communiquer les informations d'état au moyen de traitement central (10) sur demande des informations d'état par le moyen de traitement central (10).

4. Système d'affichage selon la revendication 1, dans lequel les quatrièmes moyens (36, 38, 40, 42) commandent les premiers moyens (18, 20) pour communiquer les informations d'état au moyen de traitement central (10), à un moment prédéterminé.

5. Système d'affichage selon l'une quelconque des revendications précédentes, dans lequel le moyen de traitement central (10) comprend les moyens (12, 16) pour composer un message comprenant un processeur pour créer un message alphanumérique.

6. Système d'affichage selon l'une quelconque des revendications précédentes, dans lequel le moyen de traitement central (10) comprend les moyens (14, 16) pour composer un message comprenant un processeur pour créer un message graphique.

7. Système d'affichage selon l'une quelconque des revendications précédentes, dans lequel le moyen de traitement central (10) comprend les moyens (14, 16) pour composer un message comprenant un processeur couplé à un moyen de numérisation pour créer un message graphique.

8. Système d'affichage selon l'une quelconque des revendications précédentes, dans lequel le quatrième moyen (28) comprend les moyens (44, 46, 48, 50) pour recevoir une pluralité de messages et afficher lesdits messages reçus sur le support d'affichage (32), conformément à un programme prédéterminé.

9. Système d'affichage selon la revendication 8, dans lequel le quatrième moyen (28) comprend les moyens (44, 46, 48, 50) pour contrôler les deuxièmes moyens (24, 26, 30) afin qu'ils fournissent les informations d'état concernant la pluralité de messages, conformément à un programme prédéterminé.

10. Système d'affichage selon l'une quelconque des revendications précédentes, dans lequel le moyen de support d'affichage (34) comprend une source d'éclairage pour le support d'affichage, et dans lequel le troisième moyen comprend un capteur d'éclairage (38) pour détecter un dysfonctionnement dans la source d'éclairage et fournir une information d'état représentative.

11. Système d'affichage selon l'une quelconque des revendications précédentes, dans lequel le moyen de support d'affichage (34) comprend une source d'alimentation pour le support d'affichage, et dans lequel les troisièmes moyens (36, 38, 40, 42) comprennent un capteur d'alimentation (40) pour détecter un disfonctionnement dans la source d'alimentation et fournir une information d'état représentative.

12. Système d'affichage selon l'une quelconque des revendications précédentes, dans lequel le moyen de support d'affichage (34) comprend un capteur (42) pour détecter une intrusion à proximité dudit moyen de support d'affichage (34) et pour fournir une information d'état représentative.
